# EUROPÄISCHE PATENTSCHRIFT

(11) **EP 3 426 745 B1**
(45) Veröffentlichungstag und Bekanntmachung des Hinweises auf die Patenterteilung: **01.12.2021**
(21) Anmeldenummer: 17709120.4
(22) Anmeldetag: 10.03.2017
(51) Int. Cl.: C09J 187/00

(54) **MATERIALIEN ZUR VERWENDUNG ALS KLEBSTOFF UND ZUR OBERFLÄCHENVERSIEGELUNG**
MATERIALS FOR USE AS ADHESIVE AND SURFACE SEALING
MATERIAUX DESTINES A ETRE UTILISES EN TANT QU'ADHESIFS ET POUR L'ETANCHEIFICATION DES SOLS

(30) Priorität: 11.03.2016 EP 16159974
(43) Veröffentlichungstag der Anmeldung: 16.01.2019
(73) Patentinhaber: EPG (Engineered nanoProducts Germany) AG, 64347 Griesheim (DE)
(72) Erfinder: SCHNEIDER, Heike, 66399 Mandelbachtal (DE); PFEIFER, Stefan, 45739 Oer-Erkenschwick (DE); KOCKLER, Ralf, 66780 Rehlingen/Siersburg (DE); ENDRES, Klaus, 66424 Homburg (DE)
(74) Vertreter: Hörschler, Wolfram Johannes
(86) Internationale Anmeldenummer: PCT/EP2017/055681
(87) Internationale Veröffentlichungsnummer: WO 2017/153576

(56) Entgegenhaltungen:
- CN-A- 102 532 556
- CN-A- 104 893 649
- JP-A- 2000 345 035
- JP-A- 2012 251 087
- DATABASE WPI Week 199333 Thomson Scientific, London, GB; AN 1993-261877 XP002761284, "Highly heat conductive film adhesive for contact bonding under heat - comprises heat conductive filler and organic binder e.g. epoxy!, acrylic! resin on both sides of inorganic film", & JP H05 179209 A (SUMITOMO BAKELITE CO) 20. Juli 1993 (1993-07-20)
- DATABASE WPI Week 199318 Thomson Scientific, London, GB; AN 1993-146260 XP002771649, & JP H05 78622 A (TOSHIBA SILICONE KK) 30. März 1993 (1993-03-30)
- DATABASE WPI Week 201355 Thomson Scientific, London, GB; AN 2012-R57385 XP002771650, & CN 102 732 209 A (UNIV ZHENGZHOU) 17. Oktober 2012 (2012-10-17)
- DATABASE WPI Week 201477 Thomson Scientific, London, GB; AN 2014-V03819 XP002771651, & CN 104 004 482 A (JIANGSU YUEDA NEW MATERIAL TECHNOLOGY CO) 27. August 2014 (2014-08-27)

## Beschreibung

Die Erfindung betrifft die Verwendung von hitzebeständigen Materialien als Klebstoffe, bestimmte Zusammensetzungen aus Hybridmaterialien und anorganischen Solen sowie deren Verwendung als Versiegelungsmaterialien und Korrosionsschutzschichten.

Metallische Bauteile bzw. Werkstoffe werden im Industriebereich wie auch im Privathaushalt in vielen verschiedenen Bereichen angewendet, in denen ein Schutz vor Korrosion erzielt bzw. der Alterungsprozess des Werkstückes verhindert oder verlangsamt werden soll. Neben unterschiedlichsten Witterungsbedingungen werden diese Bauteile Umgebungen ausgesetzt, die eine besonders anspruchsvolle chemische und physikalische Belastung für die eingesetzten Beschichtungsmaterialen und Werkstoffe darstellen. Insbesondere in Gegenwart korrosiver Medien und in Kombination mit thermischer Wechselbelastung oder hohen Druckbelastungen wird ein erhöhtes Anforderungsprofil an die verwendeten Materialien gestellt.

Nicht geschützte medienführende Leitungssysteme unterliegen, unabhängig von ihrem Einsatzstandort und der jeweiligen Anwendung, Korrosionsprozessen, die das eingesetzte Material beschädigen und einen hohen Reparaturaufwand mit sich führen. Die Korrosion der Leitungssysteme führt jährlich zu hohen finanziellen Verlusten, die durch Reparaturen und Wartungsarbeiten entstehen. Insbesondere bei Leitungssystemen, die für Natur und Umwelt schädliche chemische Verbindungen führen, kann Korrosion dazu führen, dass zusätzlich zu finanziellen Schäden auch immense ökonomische Schäden auftreten.

Im Bereich der Verklebung von metallischen und anderen Werkstoffen werden unterschiedlichste polymerartige Klebesysteme eingesetzt. Dabei ist es das Ziel, Werkstücke temporär oder permanent miteinander zu verbinden. Die derzeit verfügbaren Klebstoffklassen unterscheiden nicht härtende Klebstoffe, physikalisch aushärtende Klebstoffe und chemisch aushärtende Klebstoffe. Der Klasse der nicht härtenden Klebstoffe oder auch der als Bindemittel bezeichneten Haftklebstoffe werden insbesondere hochviskose Polymersysteme zugeordnet, die als meist lösungsmittelfreie niedrigviskose Systeme aufgetragen werden und mittels UV oder thermisch in den klebfähigen Zustand gebracht werden. Derartige zum Beispiel in der Luftfahrtindustrie eingesetzte Materialien zeigen gute Festigkeiten sind aber thermisch nur bis ca. 200-220°C stabil.

Zur Klasse der physikalisch aushärtenden Kleber zählen Plastisole, Schmelzkleber, Lösungsmittelklebstoffe und Dispersionen. Diese sind zum einen lösungsmittelhaltige Systeme (Kontaktklebstoffe), die hochmolekular aber chemisch nicht vernetzt sind. Die Viskosität der Materialien wird durch Zugabe von Lösungsmittel erniedrigt und die Kontaktklebstoffe werden auf beide Fügeteile aufgebracht. Die Plastisole werden insbesondere im Fahrzeugbau eingesetzt, und es handelt sich bei diesen Klebstoffen um in Lösungsmitteln dispergierte Polymere wie Polyvinylchlorid. Auch diese Kleber zeigen, ebenso wie die Schmelzklebstoffe, je nach Anwendungsbereich gute Klebeeigenschaften, aber die thermische Beständigkeit liegt im Bereich von nur 120 bis 150°C.

Zu den chemisch härtenden Klebstoffen zählen die Einkomponenten- (niedrigmolekulare, plastifizierende Substanzen auf Basis von Phenol-, Epoxidharzen, Polybenzimidazolen oder Polyimiden), die Zweikomponenten- (Polyester, kalthärtende Epoxidharze, Acrylatklebstoffe und Urethane) und die kalthärtenden Materialen (Methacrylate und Silikonharze). Auch diese Klebmittel zeigen gute Hafteigenschaften und zum Teil hohe Verformungsfestigkeiten. Aber auch hier liegt die maximale Temperaturbeständigkeit im Bereich von 200°C.

Aus dem Stand der Technik geht hervor, dass zahlreiche Zusammensetzungen zur Verklebung von metallischen Werkstoffen zur Verfügung stehen. Allerdings sind keine Materialien bekannt, die sowohl eine hohe Temperaturbeständigkeit > 250°C aufweisen und auch als Klebstoff zum Beispiel zur Herstellung von Laminatstrukturen eingesetzt werden können. Gleichzeitig ist nicht bekannt, dass die Klebesysteme auch als Korrosionsschutzschichten oder Versiegelungswerkstoffe verwendet werden können

Der Erfindung liegt daher die Aufgabe zugrunde, Materialien bereitzustellen, die als Klebstoffe, insbesondere für Metalle, geeignet sind und eine hohe Temperaturbeständigkeit, vorzugsweise > 250 °C, aufweisen.

Überaschenderweise wurde nun gefunden, dass sich bestimmte organische, anorganische und Hybridmaterialien als Klebstoffe, insbesondere als Metall-Metall Klebstoffe eignen. Explizit wurde festgestellt, dass diese Materialien für thermisch anspruchsvolle Anwendungen eingesetzt werden können, in denen insbesondere zwei Metallwerkstücke oder ein Metallwerkstück mit einem Kunststoffbauteil dauerhaft verklebt werden soll.

Gegenstand der Erfindung ist daher die Verwendung von einem oder mehreren Materialien aus der Gruppe bestehend aus
einem oder mehreren Hybridmaterialien enthaltend ein organisches Polymer aus der Gruppe der Polyamide, Polyimide und Epoxidharze und ein anorganisches Oligo- oder Polymer aus der Gruppe der Oligo- und Polysiloxane und Heterokondensaten von Si mit Ti, Zr und/oder Al, wobei die organische und die anorganische Komponente kovalent aneinander gebunden sind, in Kombination mit einem oder mehreren anorganischen Solen auf Basis von Silylalkoxylaten und/oder Titanalkoxylaten, wobei Hybridmaterial und anorganisches Sol vernetzt sind,
als Klebstoff zum Verkleben von Metallen, Kunststoffen, Beton und/oder Keramiken.

Ein weiterer Gegenstand der Erfindung ist ein Verfahren zum Verkleben von zwei Substraten mit Metall-, Kunststoff, Beton und/oder Keramikoberflächen, wobei man auf mindestens eine Metall-, Kunststoff-, Beton oder Keramikoberfläche mindestens eines Substrats einen oder mehrere Klebstoffe aus der Gruppe bestehend aus
einem oder mehreren Hybridmaterialien enthaltend ein organisches Polymer aus der Gruppe der Polyamide, Polyimide und Epoxidharze und ein anorganisches Oligo- oder Polymer aus der Gruppe der Oligo- und Polysiloxane und Heterokondensaten von Si mit Ti, Zr und/oder Al, wobei die organische und die anorganische Komponente kovalent aneinander gebunden sind, in Kombination mit einem oder mehreren anorganischen Solen auf Basis von Silylalkoxylaten und/oder Titanalkoxylaten, wobei Hybridmaterial und anorganisches Sol vernetzt sind,
aufbringt und danach die beiden Substrate zusammenfügt.

Die erfindungsgemäß eingesetzten Materialien sind teilweise bekannt und teilweise neu. Gegenstand der Erfindung ist daher auch eine Zusammensetzung, enthaltend
aa) ein Hybridmaterial, enthaltend ein organisches Polymer aus der Gruppe der Polyamide, Polyimide und Epoxidharzen und, daran kovalent gebunden, ein anorganisches Oligo- oder Polymer aus der Gruppe der Oligo- oder Polysiloxane oder entsprechender Heterokondensate von Si mit Ti, Zr und/oder Al, und
ab) ein anorganisches Sol auf Basis von Silylalkoxylaten und/oder Titanalkoxylaten,
wobei Hybridmaterial und Sol vernetzt sind.

Die erfindungsgemäßen Zusammensetzungen eignen sich neben einer Verwendung als Klebstoff auch in hervorragender Weise als Versiegelungsmaterialien und Korrosionsschutzschichten.

Gegenstand der Erfindung ist daher auch die Verwendung einer erfindungsgemäßen Zusammensetzung als Versiegelungsmaterial und/oder Korrosionsschutzschicht.

Die erfindungsgemäß eingesetzten Materialien zeigen sehr gute Klebeeigenschaften und eine hervorragende Temperaturbeständigkeit der Klebeschicht von > 250 °C. Erfindungsgemäße Zusammensetzungen eignen sich zudem in besonderer Weise als Versiegelung- und Korrosionsschutzschichten. Darüber hinaus können ausgekleidete Rohre zur Herstellung von T-Stücken perforiert werden, ohne dass der Klebstoff an Leistung verliert.

### Materialien

Das als Klebstoff eingesetzte Material ist ein Hybridmaterial b) enthaltend ein organisches Polymer aus der Gruppe der Polyamide, Polyimide und Epoxidharze, die gegenüber den anorganischen Segmenten reaktive End- oder Seitengruppen aufweisen, und ein anorganisches Oligo- oder Polymer aus der Gruppe der Oligo- und Polysiloxane sowie Heterokondensaten von Si mit Ti, Zr und/oder Al, wobei die organische und die anorganische Komponente kovalent aneinander gebunden sind.

Erfindungsgemäß eignen sich organische Polymere grundsätzlich alle Polyamide, Polyimide und Epoxidharze, die eine Temperaturstabilität von mindestens 250 °C aufweisen und über funktionelle End- und/oder Seitengruppen verfügen, die zur kovalenten Anbindung der anorganischen Komponente geeignet sind, wie Epoxy, OH oder NH-Funktionen.

Die eingesetzten Polymere müssen zudem über freie funktionelle Gruppen verfügen, die eine Aushärtung beim Kleben ermöglichen, beispielsweise endständige Epoxigruppen.

Als Polyamide eignen sich aliphatische Polyamide, beispielsweise aus Hexamethylendiamin und Adipinsäure, teilaromatische Polyamide, beispielsweise aus Hexamethylendiamin und Terephthalsäure, und aromatische Polyamide, beispielsweise aus Phenylendiamin und Terephthalsäure, wobei aromatische Polyamide bevorzugt sind. Neben Homopolyamiden sind auch Copolyamide aus verschiedenen Monomeren bevorzugt.

Bevorzugte Monomere für Diimide sind Di- oder höhere Amine sowie Di- und Trianhydride. Besonders bevorzugt sind:
1. Diamine: H₂N-R-NH₂, wobei R Alkyl und/oder Aryl sein kann und die auch funktionelle Gruppen wie SH oder CF₂ enthalten können, wobei NH₂-Gruppen mindestens 3 C-Atome Abstand haben;
2. Anhydride von Di- oder höheren Carbonsäuren wie Maleinsäureanhydrid, Bernsteinsäureanhydrid, Diglykolanhydrid, Glutarsäureanhydrid, Dianhydride und Trianhydride, beispielsweise Dianhydride, besonders bevorzugt Pyromellitsäuredianhydrid, Diethylentriaminpentaessigsäure, 1,4,5,8-Naphthalintetracarbonsäureanhydrid, Cyclobutan-1,2,3,4-tetracarbonsäureanhydride, Benzophenontetracarbonsäuredianhydrid, 3,3',4,4'-Biphenyltetracarbonsäuredianhydrid, cis-1,2,3,4-Cyclopentantetracarbonsäuredianhydrid, Tetrahydrofuran-2,3,4,5-tetracarboxyldianhydrid,

Trianhydride: Mellitsäuretrianhydrid, Decacyclentrianhydrid.

In einer besonders bevorzugten Ausführungsform ist das Polyimid aus den Monomeren 4,4'-Bis(3-aminophenoxy)diphenylsulfon und Benzophenontetracarbonsäuredianhydrid gebildet.

In einer weiteren bevorzugten Ausführungsform wird das anorganisch modifizierte Polyimid (das auch teilweise amidische Struktureinheiten enthalten kann) durch Umsetzung von einem oder mehreren Di- oder Trianhydriden mit aminofunktionalisierten Alkoxysilanen erhalten. Zur Steuerung der Kettenlänge und Verzweigung kann dabei ein gewisser Anteil an Anhydriden von Monocarbonsäuren, wie Essigsäureanhydrid, zugesetzt werden.

Besonders bevorzugt sind die in der deutschen Patentanmeldung DE 10 2011 001 833 A1 beschriebenen Materialien. Diese sind Bis(alkoxyalkylsilylalkyl)imide/Bis(alkoxyalkylsilylalkyl)amide Silyleinheiten mit folgender Struktur:

(R¹)ₓ(R²)_{y}-Si-(CH₂)ₙ-[NR³-(CH₂)ₘ]_{z}-NR⁴∼

mit R¹ = Alkoxyl, bevorzugt lineares oder verzweigtes C₁-C₆ Alkoxyl, noch weiter bevorzugt Ethoxy, Methoxy, Isopro- pyloxy, Propyloxy
R² = Alkyl, bevorzugt lineares oder verzweigtes C₁-C₆-Alkyl, noch weiter bevorzugt Methyl, Ethyl, Propyl, Isopropyl,
x = 1-3, y = 3 - x
n = 1 bis 5, bevorzugt 2 oder 3
z = 0 bis 5, bevorzugt 0, 1, oder 2
R³ = H oder Trimethylsilyl, wobei für den Fall, dass z > 1 ist, jedes R³ jeder Einheit unabhängig voneinander ausgewählt sein kann,
m = 1 bis 5, bevorzugt 2 oder 3, wobei für den Fall, dassz> 1 ist, jedes m jeder Einheit unabhängig voneinander ausgewählt sein kann,
R⁴ = H, Trimethylsilyl oder Carboxyl (im Falle von Iminen)
Der Begriff "Silyleinheit" bedeutet dabei einen Ausschnitt bzw. eine Teilstruktur der bevorzugten erfindungsgemäßen Bis(alkoxyalkylsilylalkyl)imide/Bis(alkoxyalkylsilylalkyl)amide

Besonders bevorzugt sind Silyleinheiten mit R¹ = Ethoxy oder Methoxy, R² = Methyl oder Ethyl in Kombination mit R⁴ = H, n = 3 und z = 0.

Ebenfalls bevorzugt sind Silyleinheiten mit R¹ = Ethoxy, R² = Ethyl in Kombination mit R⁴ = H, n = 2 oder 3 und z = 0.

Besonders bevorzugt sind Silyleinheiten mit R¹ = Ethoxy oder Methoxy, R² = Methyl oder Ethyl in Kombination mit R³ = H, R⁴ = H oder Carboxyl, n = 3, m = 2 und z = 1 oder 2; besonders bevorzugt ist R¹ = Ethoxy, R²= Ethyl, z = 1 und R⁴ = Carboxyl.

Bevorzugt sind auch co-polymerisierte Bis(alkoxyalkylsilylalkyl)imide/Bis(alkoxyalkylsilylalkyl)amide, umfassend Silyleinheiten der obigen Struktur, allerdings mit x = 0 (d. h. ohne Alkoxygruppen), die als "Kappungsenden" dienen können. Dies kann je nach konkreter Anwendung zur Erzielung kleinerer Polymere von Interesse sein.

Gemäß einer weiteren bevorzugten Ausführungsform umfassen die Bis(alkoxyalkylsilylalkyl)imide 5- oder 6- gliedrige cyclische Imine bzw. die Bis(alkoxyalkylsilylalkyl)amide deren davon abgeleitete offenkettige Monoamide.

Besonders bevorzugt sind dabei Imine, die sich von der Pyromellithsäure ableiten, d.h. Imine und Amide der folgenden Struktur:

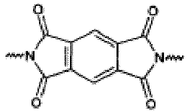

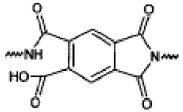

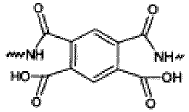

Bevorzugt haben die erfindungsgemäßen Bis(alkoxyalkylsilylalkyl)imide/Bis(alkoxyalkylsilylalkyl)amide folgende Strukturen: 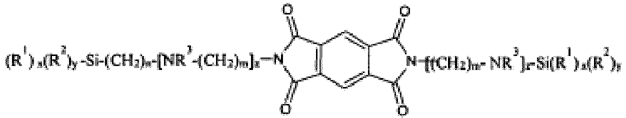 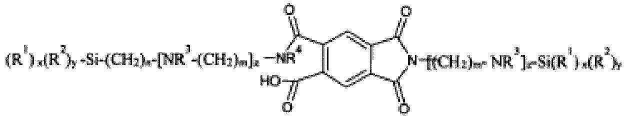 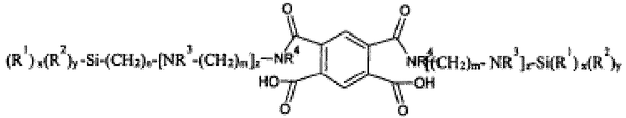
mit R¹ = Alkoxyl, bevorzugt lineares oder verzweigtes C₁-C₆ Alkoxyl, noch weiter bevorzugt Ethoxy, Methoxy, Isopro- pyloxy, Propyloxy
R² = Alkyl, bevorzugt lineares oder verzweigtes C₁-C₆-Alkyl, noch weiter bevorzugt Methyl, Ethyl, Propyl, Isopropyl,
x = 1-3, y = 3 - x
n = 1 bis 5, bevorzugt 2 oder 3
z = 0 bis 5, bevorzugt 0, 1, oder 2
R³ = H oder Trimethylsilyl, wobei für den Fall, dass z > 1 ist, jedes R³ jeder Einheit unabhängig voneinander ausgewählt sein kann,
m = 1 bis 5, bevorzugt 2 oder 3, wobei für den Fall, dass z > 1 ist, jedes m jeder Einheit unabhängig voneinander ausgewählt sein kann,
R⁴ = H oder Trimethylsilyl, besonders bevorzugt ist R¹ = Ethoxy oder Methoxy,
R² = Methyl oder Ethyl in Kombination mit R⁴ = H, n = 3 und z = O.

Ebenfalls bevorzugt ist R¹ = Ethoxy, R² = Ethyl in Kombination mit R⁴ = H, n = 2 oder 3 und z = 0.

Besonders bevorzugt ist R¹ = Ethoxy oder Methoxy, R² = Methyl oder Ethyl in Kombination mit R³ = H, R⁴ - H oder Carboxyl, n = 3, m = 2 und z = 1 oder 2;
noch bevorzugt ist R¹ = Ethoxy, R² = Ethyl, z = 1 und R⁴ = Carboxyl.

Besonders bevorzugt sind auch polymerisierte Tetraalkoxysilane/Trialkoxyalkylsilane/Dialkoxyalkylsilane.

Dabei beträgt das Anteil (in Gew:Gew) an Tetraalkoxy-silanen/ Trialkoxyalkylsilanen/Dialkoxyalkylsilanen bezogen auf die Bis(alkoxyalkylsilylalkyl)imide/Bis(alkoxyalkylsilylalkyl)amide von >5% bis <90% (jeweils bezogen auf die Edukte vorder Polymerisation), besonders bevorzugt >10% bis <80% sowie am meisten bevorzugt von >20% bis <70%.

Unter dem Begriff "Tetraalkoxysilante/Trialkoxyalkylsilane/Dialkoxyalkylsilane" wird insbesondere verstanden, dass eine dieser Komponenten vorhanden ist, aber auch zwei oder alle drei. Besonders bevorzugt sind eine Mischung aus Trialkoxyalkylsilanen und Dialkoxyalkylsilanen sowie eine Mischung aller drei Komponenten.

Bevorzugte Tetraalkoxysilane sind insbesondere Tetraethoxysilan und Tetramethoxysilan, besonders bevorzugt Tetraethoxysilan.

Bevorzugte Trialkoxyalkylsilane sind insbesondere Triethoxyethylsilan, Triethoxymethylsilan, Trimeth- oxyethylsilan und Trimethoxymethylsilan, besonders bevorzugt Triethoxymethylsilan.

Bevorzugte Dialkoxydialkylsilane sind insbesondere Diethoxydiethylsilan, Diethoxydimethylsilan, Di- methoxydiethylsilan und Dimethoxydimethylsilan, besonders bevorzugt Diethoxydimethylsilan.

Besonders bevorzugt sind Mischungen bestehend aus (jeweils Gew-% bezogen auf die gesamte Gew. von Tetraalkoxysilane/Trialkoxyalkylsilane/Dialkoxyalkylsilane) enthaltend >0% bis <50% Tetraalkoxysilan, >1% bis <90% Trialkoxyalkylsilane und >10% bis <100% Dialkoxyalkylsilane (wobei die Summe der Gew- % Anteile selbstverständlich immer 100% ergibt).

Die Herstellung solcher Materialien erfolgt bevorzugt durch:
a) Vorlegen einer geeigneten Carboxylverbindung, bevorzugt eines Bisanhydrids,
b) Zugabe von Bis(alkoxyalkylsilylalkyl)amin zur Herstellung von Bis(alkoxyalkyl-silylalkyl)imiden/Bis(alkoxyalkylsilylalkyl)amiden,
c) Polymerisation der Bis(alkoxyalkylsilylalkyl)imiden(Bis(alkoxyalkylsilylalkyl)amide und
d) optional Hinzufügen von Tetraalkoxysilan/Trialkoxyalkylsilan/Dialkoxyalkylsilan und nachfolgende Hydrolyse.

Als Epoxidharze eignen sich alle bekannten Epoxidharze, soweit sie eine Temperaturbeständigkeit von mindestens 160 bis 250 °C aufweisen. Beispiele sind Bisphenol-basierte Epoxidharze, Novolake, aliphatische Epoxidharze und halogenierte Epoxidharze, wobei Epoxidharze auf Basis von Bisphenol bevorzugt sind.

Als anorganische Komponente werden organisch funktionalisierte Alkoxysilane, Titanalkoxide, gegebenenfalls in Mischung mit Zirkon und/oder Aluminiumalkoxylaten verwendet, die chemisch mit der organischen Komponente gekoppelt sind. Die auf diesem Weg erzeugten Hybridstrukturen zeichnen sich dadurch aus, dass sowohl bei der Synthese, der Applikation bzw. der Härtung des Materials keine Separation der organischen-anorganischen Phase auftreten kann.

Somit wird erreicht, dass homogene Klebeigenschaften gewährleistet werden können. Weiterhin wirken die erzeugten Polymere als temperaturstabile Bindemittel, die eine hohe Barriere-Wirkung gegenüber Wasser, wässrigen Lösung als auch organischen Lösungsmitteln und chemischen Zusammensetzungen wie sie in der Öl und Gas Industrie auftreten, vorweisen. In Kombination mit Pigmenten, Füllstoffen oder funktionalen Additiven sind Kombinationsbeschichtungen zugänglich, die folgende herausragende Eigenschaften aufweisen:
- keine verminderte Klebewirkung, im Falle einer chemisch oder thermisch belastendenden Exposition,
- die Materialien quellen auch in Kontakt mit Lösungsmitteln oder flüssigen chemischen Komponenten nicht oder delaminieren,
- sie stellen eine funktionsfähige Barriere gegenüber korrosiven Medien dar.

Durch die Variation der Mengenverhältnisse, beispielsweise 50:50, 45:55, 30:70 oder 12:88, der organischen Komponente gegenüber der anorganischen Komponente kann sowohl die thermische Stabilität als auch die Flexibilität der erzeugten Kleber gezielt eingestellt werden. Auf diesem Weg ist es dem Fachmann möglich, maßgeschneiderte Produkteigenschaften für ein breites Anwendungsspektrum zu erzeugen. Somit lässt sich entweder die thermische und mechanische sowie die Korrosionsbeständigkeit in den Vordergrund rücken, als auch die Flexibilität und die Korrosionsbeständigkeit und die Kompatibilität zu niedrig legierten Stählen. Durch die einstellbaren Schichteigenschaften lassen sich dementsprechend sowohl weite Bereiche der Technik wie der Gas- und Öl Industrie abdecken als auch Anwendungen im Bereich anderer medienführender und zur Lagerung und Transport verwendeter Bauteile und Anlagen.

In einer weiteren bevorzugten Ausführungsform besteht das als Klebstoff verwendete Material aus einem oder mehreren (ethanolisch/wässrig) anorganischen, gegebenenfalls organisch modifizierten Solen (b) auf Basis von Silylalkoxylaten und/oder Titanalkoxylaten.

Geeignete Materialien sind beispielsweise in der DE-A 10 2004 001 097 und der US-A 6,162,498 beschrieben.

Ein derartiges Material ist z.B. erhältlich durch Hydrolyse und Polykondensation eines oder mehrerer Silane der allgemeinen Formel (I)

RₙSiX₄₋ₙ (I)

worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe, dass mindestens ein Silan mit n = 1 oder 2 verwendet wird, oder davon abgeleiteter Oligomere,
gegebenenfalls in Anwesenheit von
a) mindestens einer Verbindung aus der Gruppe der Oxide und Hydroxide der Alkali- und Erdalkalimetalle und gegebenenfalls
b) zugesetzten nanoskaligen SiO₂-Teilchen.

Unter den obigen Silanen der allgemeinen Formel (I) befindet sich mindestens ein Silan, in dessen allgemeiner Formel n den Wert 1 oder 2 aufweist. In der Regel werden mindestens zwei Silane der allgemeinen Formel (I) in Kombination eingesetzt. In diesem Fall werden diese Silane bevorzugt in einem solchen Verhältnis eingesetzt, dass der Durchschnittswert von n (auf molarer Basis) 0,2 bis 1,5, vorzugsweise 0,5 bis 1,0, beträgt. Besonders bevorzugt ist ein Durchschnittswert von n im Bereich von 0,6 bis 0,8.

In der allgemeinen Formel (I) sind die Gruppen X, die gleich oder verschieden voneinander sind, hydrolysierbare Gruppen oder Hydroxylgruppen. Konkrete Beispiele für hydrolysierbare Gruppen X sind Halogenatome (insbesondere Chlor und Brom), Alkoxygruppen und Acyloxygruppen mit bis zu 6 Kohlenstoffatomen. Besonders bevorzugt werden Alkoxygruppen, insbesondere C₁₋₄-Alkoxygruppen wie Methoxy, Ethoxy, n-Propoxy und i-Propoxy. Vorzugsweise sind die Gruppen X in einem Silan identisch, wobei besonders bevorzugt Methoxy- oder Ethoxygruppen eingesetzt werden.

Bei den Gruppen R in der allgemeinen Formel (I), die im Falle von n = 2 gleich oder identisch sein können, handelt es sich um Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen. Konkrete Beispiele für derartige Gruppen sind Methyl, Ethyl, n-Propyl, i-Propyl, n-Butyl, sek.-Butyl und tert.-Butyl, Vinyl, Allyl und Propargyl, Phenyl, Tolyl und Benzyl. Die Gruppen können übliche Substituenten aufweisen, vorzugsweise tragen derartige Gruppen aber keinen Substituenten. Bevorzugte Gruppen R sind Alkylgruppen mit 1 bis 4 Kohlenstoffatomen, insbesondere Methyl und Ethyl, sowie Phenyl.

Erfindungsgemäß bevorzugt ist es, wenn mindestens zwei Silane der allgemeinen Formel (I) eingesetzt werden, wobei in einem Fall n = 0 und im anderen Fall n = 1 ist. Derartige Silan-Mischungen umfassen zum Beispiel mindestens ein Alkyltrialkoxysilan (z.B. (M)ethyltri(m)ethoxysilan) und ein Tetraalkoxysilan (z.B. Tetra(m)ethoxysilan), die vorzugsweise in einem solchen Verhältnis eingesetzt werden, dass der Durchschnittswert von n in den oben angegebenen bevorzugten Bereichen liegt: Eine besonders bevorzugte Kombination für die Ausgangssilane der Formel (I) ist Methyltri(m)ethoxysilan und Tetra(m)ethoxysilan.

Die Hydrolyse und Polykondensation des oder der Silane der allgemeinen Formel (I) kann in Anwesenheit mindestens einer Verbindung der Gruppe der Oxide und Hydroxide der Alkali- und Erdalkalimetalle durchgeführt werden. Bei diesen Oxiden und Hydroxiden handelt es sich vorzugsweise um solche von Li, Na, K, Mg, Ca und/oder Ba. Vorzugsweise werden Alkalimetalle, insbesondere Na und/oder K verwendet. Bei Verwendung eines Alkalimetalloxids bzw. -hydroxids wird dieses vorzugsweise in einer solchen Menge eingesetzt, dass das Atomverhältnis Si : Alkalimetall im Bereich von 20:1 bis 7:1, inbesondere von 15:1 bis 10:1, liegt.

Die gegebenenfalls zusätzlich zu den hydrolysierbaren Silanen der allgemeinen Formel (I) verwendeten nanoskaligen SiO2-Teilchen werden vorzugsweise in einer solchen Menge eingesetzt, dass das Verhältnis aller Si-Atome in den Silanen der allgemeinen Formel (I) zu allen Si-Atomen in den nanoskaligen SiO2-Teilchen im Bereich von 5:1 bis 1:2, insbesondere 3:1 bis 1:1, liegt.

Unter nanoskaligen SiO2-Teilchen werden SiO2-Teilchen mit einer durchschnittlichen Teilchengröße (bzw. einem durchschnittlichen Teilchendurchmesser) von vorzugsweise nicht mehr als 100 nm, bevorzugter nicht mehr als 50 nm und insbesondere nicht mehr als 30 nm verstanden. Hierfür können z.B. auch handelsübliche Kieselsäureprodukte, z.B. Kieselsole, wie die Levasile^{®}, Kieselsole der Bayer AG, oder pyrogene Kieselsäuren, z.B. die Aerosil-Produkte von Degussa, verwendet werden. Die teilchenförmigen Materialien können in Form von Pulvern und Solen zugesetzt werden. Sie können aber auch in situ bei der Hydrolyse und Polykondensation der Silane gebildet werden.

Die Hydrolyse und Polykondensation der Silane können in Abwesenheit oder Anwesenheit eines organischen Lösungsmittels durchgeführt werden. Vorzugsweise ist kein organisches Lösungsmittel vorhanden. Bei Einsatz eines organischen Lösungsmittels sind die Ausgangskomponenten vorzugsweise im Reaktionsmedium (das in der Regel Wasser einschließt) löslich. Als organische Lösungsmittel eignen sich insbesondere mit Wasser mischbare Lösungsmittel wie beispielsweise ein- oder mehrwertige aliphatische Alkohole (wie beispielsweise Methanol, Ethanol), Ether (wie beispielsweise Diether), Ester (wie beispielsweise Ethylacetat), Ketone, Amide, Sulfoxide und Sulfone. Im Übrigen können die Hydrolyse und Polykondensation gemäß den dem Fachmann geläufigen Modalitäten durchgeführt werden.

In einer weiteren bevorzugten Ausführungsform besteht das als Klebstoff verwendete Material aus einer Zusammensetzung (a) enthaltend
aa) ein Hybridmaterial, enthaltend ein organisches Polymer aus der Gruppe der Polyamide, Polyimide und Epoxidharzen und, daran kovalent gebunden, ein anorganisches Oligo- oder Polymer aus der Gruppe der Oligo- oder Polysiloxane oder entsprechender Heterokondensate von Si mit Ti, Zr und/oder Al, und
ab) ein anorganisches Sol auf Basis von Silylalkoxylaten und/oder Titanalkoxylaten,
wobei Hybridmaterial und Sol vernetzt sind.

Geeignete Materialien a) und b) sind obenstehend beschrieben.

Die Vernetzung kann physikalisch, beispielsweise über Wasserstoffbrückenbindungen oder, bevorzugt, chemisch über kovalente Bindungen erfolgen.

Zur Vernetzung der Komponenten aa) und ab) wird, vorzugsweise thermisch, bei Temperaturen zwischen 100 und 500°C gehärtet, wobei eine Temperatur zwischen 140 und 250°C besonders bevorzugt ist. Bei der thermischen Härtung wird über den Reaktionsweg Sol-Gel-Feststoff der gewünschte Klebstoff gebildet. Darüber hinaus können die unter aa) und ab) beschriebenen Systeme durch Formulierung mit einem geeigneten verkapselten Härtungsbeschleuniger in einer chemische kontrollierten Reaktionsführung gehärtet werden, die durch leichtes Andrücken der zu verklebenden Substrate initiiert werden kann.

In einer weiteren bevorzugten Ausführungsform der Erfindung besteht das als Klebstoff eingesetzte Material d) aus einem oder mehreren Polyamiden, Polyimiden und/oder Epoxidharzen in Mischung mit oxidischen und/oder nichtoxidischen Metall- und/oder Halbmetallpartikeln, vorzugsweise aus der Gruppe der Oxide, Nitride, Carbide und deren Mischungen.

Geeignete Polymere sind obenstehend beschrieben.

Bevorzugt als oxidische und/oder nichtoxidische Metall- und/oder Halbmetallpartikel sind Siliciumcarbid, Siliciumoxid, Siliciumnitrid, Hartstoffe mit SiNAI- oder SiNC-Phasen, Zirconcarbid, Zinkoxid und/oder Aluminiumoxid.

Besonders bevorzugt sind:
- pyrolytisch hergestellte SiO₂-Partikel mit einer hydrophobierten Oberfläche oder hydrophilen Oberfläche oder Gemische, wobei hydrophobierte Partikel bevorzugt sind. (d50 = 20 nm). Geeignet sind Partikel mit einer mittleren Partikelgröße zwischen 5 bis 8 nm, bevorzugt 5 bis 20 nm,
- Siliciumcarbid (SiC), bevorzugt mit mittleren Partikelgrößen von 0,3 bis 4,4 µm wie SiC UF 10 (d50 = 0,7 µm),
- ZrC, bevorzugt mit einer mittleren Partikelgröße von 0,5 und 5 µm, besonders bevorzugt 2 µm.

Die erfindungsgemäßen Materialien a) bis d) können mit weiteren funktionalen Additiven und/oder Pigmenten dotiert werden. So ist es möglich, Magnetit oder andere nanoskalige magnetische Partikel einzubauen. Durch die Dotierung der Materialien mit magnetischen Partikeln wird ermöglicht, dass durch geeignete Analyseverfahren ein Schichtdefekt frühzeitig erkannt wird und Reparaturmaßnahmen getroffen werden können, bevor ein irreparabler Schaden der geschützten Struktur oder ein Totalausfall des versiegelten Werkstückes auftritt.

Durch die besonders dicht vernetzen anorganischen Netzwerksegmente und dem geringen organischen Anteil und/oder durch den Einbau chemisch stabiler Gruppen wie den Imiden wird zudem eine gegenüber organischen Systeme herausragende Schwefelwasserstoff-Beständigkeit erzielt. Diese kann weiterhin durch Einbau von geeigneten funktionellen Gruppen oder Pigmenten gesteigert werden.

Weiterhin ist es möglich, nanoskaliges Titandioxid in die Beschichtung einzubetten. Durch die gezielte Dotierung mit Titandioxid, bevorzugt Rutil und/oder Anatas, insbesondere in der Anatas-Form, wird die Funktionalität der Beschichtung um die photokatalytische Selbstreinigung erweitert. Hierdurch kann unter UV-Einstrahlung die Oberfläche desinfiziert oder gereinigt werden.

Weiterhin können geeignete H₂-Speicherstoffe wie Zn-basierte Metalorganic Frameworks (MoF) eingebaut werden. Diese Verbindungen stellen einen Wasserstoffspeicher dar und können durch die Bindung von molekularem Wasserstoff eine Metallversprödung verhindern.

Durch den gezielten Einbau von fluorhaltigen Additiven, wie beispielhaft in Synthesebeispiel D-1 beschrieben, wird eine zusätzliche und verbesserte antiadhäsive Eigenschaft der Beschichtung erzielt. Der Einbau der antiadhäsiven Komponente kann direkt in der Synthese erfolgen oder als abschließende Oberflächenbehandlung durchgeführt werden. Hier eignen sich neben PTFE-Partikeln insbesondere Fluoralkyl-modifizierte Alkoxy- oder Chlorosilane. Geeignet sind auch Polyethylene wie HDPE.

Durch geeignete Zusätze und Verfahren lässt sich eine Strukturierung der Oberfläche herbeiführen. Hierdurch kann der sogenannte Haifischhaut-Effekt erzielt werden. Wesentlicher Einfluss einer Oberflächenstrukturierung sind verbesserte Flusseigenschaften der durch die Rohrsysteme geleiteten Medien.

Die erfindungsgemäßen Materialien werden bevorzugt bei Raumtemperatur appliziert. Insbesondere durch ein geeignetes Sprühverfahren lassen sich gleichmäßige Schichten applizieren, die neben guter Klebewirkung einen exzellenten Korrosionsschutz entwickeln. Der Nassfilm kann in einem oder in mehreren Schritten aufgetragen werden, wobei sich zeigte, dass besonders gute Filme erzeugt werden, wenn die Einzelschichten und/oder Zwischenschichten einen Nassfilm von 2 bis 30 µm, bevorzugt 5 bis 15 µm, nicht über- oder unterschreiten.

Die Trocknung oder die Aushärtung der erfindungsgemäß applizierten Klebstoffe erfolgt in Abhängigkeit der Schichtzusammensetzung, insbesondere in Abhängigkeit des Verhältnisses des organischen und anorganischen Anteils, zwischen 100°C und 350°C, in besonderen Ausführungsformen bis 500°C. Überraschenderweise zeigte sich, dass für Anwendungen, die unter einer thermischen Belastung stehen, eine Aushärtung der Beschichtung erst in der Anwendung stattfinden muss. Für solche Prozesse zeigte sich, dass eine kurzzeitige Aushärtung ausreichend ist, ohne die Eigenschaften und Lebensdauer der Beschichtung negativ zu beeinträchtigen. Als geeignete Härtungsmethoden erwiesen sich neben diskontinuierlichen konventionellen Umluftöfen auch Durchlauföfen, die einen kontinuierlichen Härtungsprozess erlauben. Darüber hinaus wurden NIR, Infrarot- oder Keramikstrahler als alternative Härtungsmethode für Flachsubstrate geprüft. Weiterhin kann die Härtung mit Lasern mit einer Wellenlänge von 1,2 µm erfolgen.

Die erfindungsgemäßen Klebstoffe können in einem automatisierten oder manuellen Sprühverfahren auf flache Substrate appliziert werden. Weiterhin eignen sich alle nasschemischen Auftragsverfahren wie Dip-Coating, Spin- Coating und Fleece-Coating als Applikationsmethoden für z.B. flache Substrate. Darüber hinaus ist es möglich, die Materialien in einem Vorhangverfahren oder anderen Nassbeschichtungsverfahren wie Rakeln aufzutragen. Um Substrate, die eine von Flachsubstraten abweichende Geometrie aufweisen, zu beschichten, eignet sich insbesondere die Sprühapplikation. Für Rohrsysteme, insbesondere für die Innenbeschichtung besagter Leitungssysteme, eignen sich Dip-Coating und Spray-Coating als Beschichtungsverfahren. In Bezug auf Dip-Coating lässt sich durch ein in das zu beschichtende Rohr eingefügtes Innenohr die benötigte Menge an Beschichtungsmaterial senken. Durch die Geschwindigkeit, mit der die Beschichtungslösung aus dem Rohr abgeführt wird, lassen sich sehr genaue Schichtdicken einstellen. Für die Applikation mittels Spray-Coating eignen sich insbesondere rotierende Sprühsysteme, die zentriert durch das Rohr geführt werden und so einen gleichmäßigen Schichtauftrag ermöglichen. Der Sprühprozess ist vorzugsweise automatisiert durchzuführen, um eine möglichst gleichmäßige Schichtdicke zu erreichen.

In Bezug auf die Haftungseigenschaften der Beschichtungsmaterialien ist vorzugsweise vor der Applikation eine Reinigung der metallischen Oberfläche durchzuführen. Die Reinigung beinhaltet die Entfernung grober Verschmutzung wie Staub, wie auch die Entfettung. Weiterhin kann in Abhängigkeit des zu beschichtenden Werkstoffes eine basische Vorbehandlung von Vorteil sein, um eine verbesserte Benetzung und Nasshaftung der Beschichtungslösung auf dem Zielsubstrat zu erreichen.

Die nach den oben aufgeführten Synthesebeispielen hergestellten Beschichtungsmaterialien können sowohl in einem diskontinuierlichen Umluft-Ofen als auch in einem kontinuierlichen thermischen Verfahren ausgehärtet werden. Alternativ kann die Härtung mit Infrarot- oder Keramikstrahlern durchgeführt werden. Auch eine Kombination von Strahlungshärtung und konvektiver Härtung zeigte sich als durchführbar. Ein wesentlicher Vorteil einer kombinierten Härtung ergibt sich aus den daraus resultierenden kürzeren Prozesszeiten gegenüber einem rein konvektiv geführten Prozess.

Für eine bevorzugte Verwendung der Materialien als Klebstoff wurde ein druckempfindlicher Aushärtungsmechanismus entwickelt. Hierzu wird das verwendete Beschichtungsmaterial vor der Applikation mit Polymerkapseln, die für die Kondensation und somit der Härtung des aufgetragenen Systems wirksame Substanzen enthalten können, vermischt.

Die Kapseln sind so konzipiert das sie bei einem erhöhten Druck aufplatzen und einen Kondensationsbeschleuniger freisetzten.

Dieses Verfahren ermöglicht zudem das Einbringen weiterer aktiver Komponenten, die z.B. zur Selbstheilung der Beschichtung im Falle des Auftretens von Defekten dienen können. Insbesondere können verkapselte Alkoxysilane wie Methyltriethoxysilan und/oder Tetraethoxyrthosilicat, eingesetzt werden. Weiterhin können organisch modifizierte Alkoxysilan Präkursoren, die vorzugsweise der allgemeinen Formel

R'nSiX₄₋ₓ (II)

entsprechen, eingesetzt werden, wobei X einer hydrolysierbaren Gruppe entspricht und R' einem Rest, der sich dadurch auszeichnet, dass keine Si-O Bindung vorliegt. R' kann entsprechend durch Wasserstoff oder durch folgende Kohlenstoffreste substituiert werden: Alkyl-, Aryl-, Aminoalkyl-, Mercaptoalkyl, Vinyl, Acryl, Isocyanat.

Darüber hinaus können in Abhängigkeit der Präkursoren zusätzlich radikalische Polymerisationsstarter (z. B Dibenzoylperoxid) eingebettet werden, die eine Polymerisation der organischen Reste einleitet.

Als Kondensationsbeschleuniger können Wasser, Säuren, insbesondere Lewis-Säuren und Basen, insbesondere Lewis-Basen, verkapselt eingesetzt werden. Als Säuren eigen sich alle sauren Aminosäuren, verdünnte Salzsäure, Phosphorsäure oder Lewis-Säuren der Form M³⁺(M= Al, B). Als basische Verbindungen können basische Aminosäuren, Polyanilin, Ammoniumhydroxid oder weitere Lewis-Basen eingesetzt werden. Die freigesetzten Substanzen haben die Funktion eines Härtungskatalysators der die Kondensation der anorganischen Komponente soweit beschleunigt, dass innerhalb weniger Minuten das Versiegelungssystem vollständig erstarrt und die geforderte thermische, chemische und mechanische Stabilität erreicht.

Ein Vorteil der erfindungsgemäßen Materialien besteht darin, dass eine Barrierewirkung bei Schichtdicken zwischen 2 µm und 10 µm vollständig erreicht wird. Aus fertigungstechnischer Sicht liegt ein weiterer Vorteil der erfindungsgemäßen Schichtsysteme darin, dass sowohl Flachsubstrate als auch Objekte mit anspruchsvollen Geometrien gut beschichtet werden können. Darüber hinaus zeigte sich, dass die Erfindung gegenüber der Schichtdicke eine breitere Toleranz zulässt als vergleichbare Materialien. Auch konnte keine höhere Defektanfälligkeit der Schicht bei Schichtdicken bis hin zu 100 µm festgestellt werden. Gleiche Toleranz wurde überraschender Weise auch in Hinblick auf die thermische Aushärtung festgestellt. Zwar konnte erfindungsgemäß für die jeweiligen Materialien ein besonders geeigneter Härtungsprozess ermittelt werden jedoch zeigte sich, dass Abweichung nicht unmittelbar signifikant schlechtere Schichten erzeugten.

Die erfindungsgemäßen Materialien, insbesondere die Zusammensetzung (a), können neben der Verwendung als Klebstoffe auch zur Oberflächenversiegelung von Metallen, Kunststoffen und Beton eingesetzt werden. Insbesondere eignen sich aus Metallen gefertigte Rohrsysteme. Weiterhin ist der Einsatz als Oberflächenversieglung für das Innere von Tanks geeignet. Dies beinhaltet sowohl solche Tanks, die für die Speicherung von Flüssigkeiten oder Gasen eingesetzt werden, als auch solche, die für den Transport entsprechender Medien verwendet werden.

Insbesondere eignen sich die erfindungsgemäßen Materialien zum Einsatz, beispielsweise als Korrosionsschutzschicht, in Medien leitenden Rohrsystemen aus Stahl, Edelstahl oder Inkonel. Sie können den Werkstoff vor Korrosion bei Raumtemperatur bis zu einer Temperatur von 500 °C gegenüber flüssigen oder gasförmigen Medien schützen, insbesondere in Tanksystemen, in denen chemische Produkte gespeichert oder transportiert werden.

Weiterhin können die erfindungsgemäßen Materialien dazu dienen, insbesondere Metall- oder Kunststoffrohre sowie Tanks mit einer korrosionsschützenden bzw. korrosionsgeschützten Metallfolie auszukleiden, um eine Korrosion des Leitungssystems, insbesondere Rohre, Verbindungsstücke, Weichen und Kupplungen und insbesondere speichernde bzw. transportierende Systeme, insbesondere Tanks, vor Korrosion zu schützen.

Die Erfindung wird durch die Beispiele näher erläutert, ohne sie dadurch einzuschränken.

### Beispiele

### Eingesetzte Materialien:

Fluorolink^{®} DH 10 = Perfluorpolyether, OH-terminiert
   L20: Epoxidharz auf Bisphenol A-Basis mit einer Viskosität von 900+-200 mPA*s und einem Epoxidäquivalent von 179+-10 g/Äquiv.
   VE 3261: Härter auf Basis Aminorguppenhaltiger Präpolymere (Polyether, Silicone, Polyanilin) oder Di-Tri-funtionale Amine
   SIC UF-10: Siliciumcarbid (d50= 0,7µm)
   Si₃N₄ (Siliciumnitrid)
   Bornitrid
Aerosil^{®} R 202: Pyrolytisch hergestellte SiO₂-Partikel mit einer hydrophobierten Oberfläche.

### Synthesevorschrift A-1:

31,14 g 4,4'Bis(3-aminophenoxy)diphenylsulfon wurden in einem geeignetem Reaktionsgefäß vorgelegt und anschließend mit 2-Methylpyrrolidon (NMP) versetzt. Anschließend wurde langsam eine mit NMP angeteigte 4,4'-Benzophenontetracarbonsäuredianhydrid-Suspension (25,78 g) hinzugetropft. Das Reaktionsgemisch wurde bei Raumtemperatur für 6 bis 8 h gerührt und anschließend zur Hydrophobierung mit 11,2 g Perfluorpolyether (-OH terminiert) versetzt. Im letzten Syntheseschritt wurden dem Gemisch 45,41 g Siliciumcarbid (d₅₀=0,7 µm) in Kombination mit 0,21 g SiO₂ (d₅₀=8 nm) hinzugegeben. Um eine homogene Lösung zu erhalten, wurde die hergestellte Polymerdispersion bei 1500U/min dispergiert. Als Dispergierhilfe wurden 10 bis 15 g Glasperlen eingesetzt.

Nach Dispergieren kann das Material für Beschichtungszwecke eingesetzt werden. Für die Applikation kann die Viskosität durch Verdünnung mit NMP eingestellt werden. Es ist bevorzugt, nach jeder Verdünnung eine kurze Ultraschallbehandlung durchzuführen.

### Synthesevorschrift B-1:

In ein Reaktionsgefäß wurden 20 g Epoxidharz mit einer Viskosität von 900+-200 mPA*s und einem Epoxidäquivalent von 179+-10 g/Äquiv vorgelegt und mit 5 g Isopropoyethanol versetzt. Anschließend wurden 0,8 g HDPE und 0,23 g eines Hydroxylgruppen terminierten Perfluorpolyethers zur Hydrophobierung hinzugegeben. Zur Verbesserung des Korrosionsschutzes wurden im Anschluss 1,6 g eines Zinkphosphat Pigments und 3,2 g Zinkoxid als Füllstoff hinzugegeben. Zur weiteren Hydrophobierung der Schichten und zur Stabilisierung der Korrosionsschutzpigmente wurden 0,25 g hydrophobes Siliciumdioxid (d₅₀=8 nm) zu Reaktionslösung hinzugefügt.

Unmittelbar vor der Applikation wurden zur Aushärtung 5g Polyetheramin hinzugegeben. Das Gemisch wurde unter Zuhilfenahme von Glasperlen bei 15°C für 60 min und einer Geschwindigkeit von 2000rpm dispergiert.

Zur Anpassung der Viskosität kann NMP, Dioxan oder Isopropoyethanol verwendet werden.

### Synthesevorschrift B-2:

In ein geeignetes Reaktionsgefäß wurden 20 g Epoxidharz mit einer Viskosität von 900+-200 mPA*s und einem Epoxidäquivalent von 179+-10 g/Äquiv vorgelegt und mit NMP versetzt. Die Lösung wurde anschließend auf 5 bis 10°C gekühlt. Anschließend wurden 7,4 g Aminopropyldiethoxysilan hinzugetropft. Nachdem die vollständige Menge Aminopropyldiethoxysilan hinzugetropft wurde und eine stabile Temperatur erreicht war, wurden dem System 3,4 g Aminopropyltriethoxysilan hinzugegeben. Zur Ausbildung des Polysilsesquioxan-Netzwerkes wurden 5,8 ml einer 0,1 molarer HCl langsam hinzugetropft. Die Rate, mit der die benötigte Salzsäure hinzugetropft wurde, war so eingestellt, dass die Temperatur 35°C nicht überschritt.

Anschließend kann das Material für Beschichtungszwecke eingesetzt werden. Für die Applikation kann die Viskosität durch Verdünnung mit kurzkettigen Alkoholen, Xylene, DMF oder Dioxan eingestellt werden.

### Synthesevorschrift B-2:

In ein Reaktionsgefäß wurden 20 g Epoxidharz vorgelegt, mit NMP versetzt und auf 5 bis 10°C gekühlt. Anschließend wurden 7,4 g Aminopropyldiethoxysilan hinzugetropft. Nachdem die vollständige Menge Aminopropyldiethoxysilan hinzugetropft wurde und eine stabile Temperatur erreicht war, wurden dem System 3,4 g Aminopropyltriethoxysilan hinzugegeben. Zur Ausbildung des Polysilsesquioxan-Netzwerkes wird 3,2 ml einer 0,1 molaren HCl langsam hinzugetropft. Die Rate, mit der die benötigte Salzsäure hinzugetropft wurde, war so eingestellt, dass die Temperatur 35°C nicht überschritt.

In einem zweiten Ansatz wurden 20 ml Methyltriethoxysilan und 6 ml Tetraethoxysilan in einem Reaktionsgefäß vorgelegt und unter Rühren bei Raumtemperatur mit 2,5 ml einer 1 N Salzsäure versetzt. Nach Zugabe der Salzsäure bildete sich unter starker Temperaturentwicklung innerhalb von 5 Minuten ein klares Sol. Nachdem das Reaktionsgemisch auf Raumtemperatur abgekühlt war, wurde das in Ansatz 2 erzeugte Sol mit dem Alkoxysilanmodifizierten Epoxy-Harz langsam vermischt.

Anschließend kann das Material für Beschichtungszwecke eingesetzt werden. Für die Applikation kann die Viskosität durch Verdünnung mit kurzkettigen Alkoholen, Xylene, DMF oder Dioxan eingestellt werden.

### Synthesevorschrift C-1:

In ein geeignet Reaktionsgefäß wurden 1,5 mol Pyromellitsäuredianhydrid vorgelegt und mit 80 g Ethanol angeteigt. Anschließend wurde die heterogene Lösung auf ca. 5°C gekühlt. Dem Gemisch wurden langsam 1,5 mol Aminopropyltrieethoxysilan hinzugetropft. Nach ca. 30 Minuten entstand eine klare Lösung. Im Anschluss wurde die Reaktionslösung langsam auf Raumtemperatur erwärmt.

Anschließend kann das Material für Beschichtungszwecke eingesetzt werden. Für die Applikation kann die Viskosität durch Verdünnung mit kurzkettigen Alkoholen, Xylene, DMF, Dioxan etc. eingestellt werden.

### Synthesevorschrift C-2

In ein geeignetes Reaktionsgefäß wurden 1,5 mol Pyromellitsäuredianhydrid vorgelegt und mit 80 g Ethanol angeteigt. Anschließend wurde die heterogene Lösung auf ca. 5°C gekühlt. Dem Gemisch wurde langsam eine Mischung aus 0,70 mol Aminopropyltriethoxysilan und 0,8 mol Aminopropyldiethoxysilan hinzugetropft. Nach ca. 30 Minuten entstand eine klare Lösung. Im Anschluss wurde die Reaktionslösung langsam auf Raumtemperatur erwärmt. Das Reaktionsgemisch wurde bei Raumtemperatur für 6 bis 8 h gerührt und anschließend zur Hydrophobisierung mit 5,8 g Alkoxysilan modifiziertem Perfluorpolyether versetzt. Im letzten Syntheseschritt wurden dem Gemisch 15 g Siliciumcarbid hinzugegeben. Um eine homogene Lösung zu erhalten, wurde die hergestellte Polymerdispersion bei 1500U/min dispergiert. Als Dispergierhilfe wurden 10 bis 15 g Glasperlen eingesetzt.

Anschließend kann das Material für Beschichtungszwecke eingesetzt werden. Für die Applikation kann die Viskosität durch Verdünnung mit kurzkettigen Alkoholen, Xylene, DMF oder Dioxan eingestellt werden.

### Synthesevorschrift D-1

20 ml der nach DE 102004001097 B4 hergestellten Beschichtungslösung wurden in einem Rundkolben vorgelegt. Dazu wurden langsam 30 ml der in Anlehnung an C1-C2 synthetisierten Materialien zugetropft. Nach einer Rührphase bei Raumtemperatur von zwei Stunden konnte das System als Hybridmaterial zu Beschichtungs- und Klebzwecken eingesetzt werden.

## Patentansprüche

1. Verwendung von einem oder mehreren Materialien aus der Gruppe bestehend aus einem oder mehreren Hybridmaterialien enthaltend ein organisches Polymer aus der Gruppe der Polyamide, Polyimide und Epoxidharze und ein anorganisches Oligo- oder Polymer aus der Gruppe der Oligo- und Polysiloxane und Heterokondensaten von Si mit Ti, Zr und/oder Al, wobei die organische und die anorganische Komponente kovalent aneinander gebunden sind, in Kombination mit einem oder mehreren anorganischen Solen auf Basis von Silylalkoxylaten und/oder Titanalkoxylaten, wobei Hybridmaterial und anorganisches Sol vernetzt sind,
als Klebstoff zum Verkleben von Metallen, Kunststoffen, Beton und/oder Keramiken,
wobei die genannten Polyamide, Polyimide und Epoxidharze, eine Temperaturstabilität von mindestens 250 °C aufweisen, über funktionelle End- und/oder Seitengruppen verfügen, die zur kovalenten Anbindung der anorganischen Komponente geeignet sind, und über freie funktionelle Gruppen verfügen, die eine Aushärtung beim Kleben ermöglichen.

2. Verwendung nach Anspruch 1, wobei der Klebstoff verkapselte Härtungsbeschleuniger, bevorzugt gewählt aus der Gruppe bestehend aus Wasser, Lewis-Säuren, Lewis-Basen und Gemischen aus diesen Komponenten, enthält.

3. Verwendung nach Anspruch 1 oder 2, wobei der Klebstoff mit magnetischen Nanopartikeln, vorzugsweise nanoskaligem Magnetit, dotiert ist, wobei die Dotierung dazu dient, Fehlstellen oder Defekte der Klebstoffschicht zu detektieren.

4. Verwendung nach einem der Ansprüche 1 bis 3, wobei der Klebstoff ein oder mehrere fluorhaltige Additive enthält.

5. Verwendung nach einem der Ansprüche 1 bis 4, wobei der Klebstoff Leitungssensoren enthält, die nach der Applikation eine Detektion von Fehlstellen ermöglichen.

6. Verwendung nach einem der Ansprüche 1 bis 5, wobei der Klebstoff verkapselte Polymerisationsstarter sowie verkapselte Alkoxysilan-Präkursoren enthält, die beim Auftreten von Defekten nach der Applikation zur Selbstheilung dienen.

7. Verwendung nach einem der Ansprüche 1 bis 6, wobei der Klebstoff in Medien leitenden Rohrsystemen aus Stahl, Edelstahl oder Inkonel, vorzugsweise in Tanksystemen, in denen chemische Produkte gespeichert oder transportiert werden, appliziert wird.

8. Verwendung nach einem der Ansprüche 1 bis 7, wobei der Klebstoff dazu dient, Metall- oder Kunststoffrohre, Betonröhren oder Tanks mit einer korrosionsgeschützten Metallfolie auszukleiden.

9. Verfahren zum Verkleben von zwei Substraten mit Metall-, Kunststoff, Beton und/oder Keramikoberflächen, wobei man auf mindestens eine Metall-, Beton oder Keramikoberfläche mindestens eines Substrats einen oder mehrere Klebstoffe nach einem der Ansprüche 1 bis 8 aus der Gruppe bestehend aus einem oder mehreren Hybridmaterialien enthaltend ein organisches Polymer aus der Gruppe der Polyamide, Polyimide und Epoxidharze und ein anorganisches Oligo- oder Polymer aus der Gruppe der Oligo- und Polysiloxane und Heterokondensaten von Si mit Ti, Zr und/oder Al, wobei die organische und die anorganische Komponente kovalent aneinander gebunden sind, in Kombination mit einem oder mehreren anorganischen Solen auf Basis von Silylalkoxylaten und/oder Titanalkoxylaten, wobei Hybridmaterial und anorganisches Sol vernetzt sind,
aufbringt und danach die beiden Substrate zusammenfügt,
wobei die genannten Polyamide, Polyimide und Epoxidharze, eine Temperaturstabilität von mindestens 250 °C aufweisen, über funktionelle End- und/oder Seitengruppen verfügen, die zur kovalenten Anbindung der anorganischen Komponente geeignet sind, und über freie funktionelle Gruppen verfügen, die eine Aushärtung beim Kleben ermöglichen.

10. Verfahren nach Anspruch 9, wobei eine Metalloberfläche mit einer Metall- oder Kunststoffoberfläche, vorzugsweise Metalloberfläche, verklebt wird.

11. Verfahren nach Anspruch 9 oder 10, wobei der Klebstoff seine Haftwirkung durch Andrücken entwickelt und durch Druck formstabil aushärtet.

12. Zusammensetzung enthaltend
ca) ein Hybridmaterial, enthaltend ein organisches Polymer aus der Gruppe der Polyamide, Polyimide und Epoxidharzen und, daran kovalent gebunden, ein anorganisches Oligo- oder Polymer aus der Gruppe der Oligo- oder Polysiloxane oder entsprechender Heterokondensate von Si mit Ti, Zr und/oder Al, und
cb) ein anorganisches Sol auf Basis von Silylalkoxylaten und/oder Titanalkoxylaten,
wobei Hybridmaterial und Sol vernetzt sind,
und wobei die genannten Polyamide, Polyimide und Epoxidharze, eine Temperaturstabilität von mindestens 250 °C aufweisen, über funktionelle End- und/oder Seitengruppen verfügen, die zur kovalenten Anbindung der anorganischen Komponente geeignet sind, und über freie funktionelle Gruppen verfügen, die eine Aushärtung beim Kleben ermöglichen.

13. Zusammensetzung nach Anspruch 12, enthaltend fluorhaltige Additive zur Einstellung einer antiadhäsiven Oberfläche.

14. Zusammensetzung nach Anspruch 12 oder 13, enthaltend Titandioxid, vorzugsweise Anatas und/oder Rutil, besonders bevorzugt Anatas, zur Erzielung eines selbstreinigenden Effekts unter UV-Einstrahlung.

15. Verwendung einer Zusammensetzung nach einem der Ansprüche 12 bis 14 als Versiegelungsmaterial und/oder Korrosionsschutzschicht.

## Claims

1. Use of one or more materials from the group consisting of one or more hybrid materials containing an organic polymer from the group of the polyamides, polyimides and epoxy resins and an inorganic oligo- or polymer from the group of the oligo- and polysiloxanes and heterocondensates of Si with Ti, Zr and/or Al, wherein the organic and the inorganic component are covalently bound to one another, in combination with one or more inorganic sols based on silyl alkoxylates and/or titanium alkoxylates, wherein hybrid material and inorganic sol are crosslinked,
as adhesive for the bonding of metals, plastics, concrete and/or ceramics,
wherein the said polyamides, polyimides and epoxy resins have a thermal stability of at least 250°C, have functional end and/or side groups which are suitable for the covalent attachment of the inorganic component, and have free functional groups which enable curing during bonding.

2. Use according to Claim 1, wherein the adhesive contains encapsulated curing accelerators, preferably selected from the group consisting of water, Lewis acids, Lewis bases and mixtures of these components.

3. Use according to Claim 1 or 2, wherein the adhesive is doped with magnetic nanoparticles, preferably nanoscale magnetite, wherein the doping serves to detect flaws or defects of the adhesive layer.

4. Use according to one of Claims 1 to 3, wherein the adhesive contains one or more fluorine-containing additives.

5. Use according to one of Claims 1 to 4, wherein the adhesive contains conduction sensors which enable detection of flaws after the application.

6. Use according to one of Claims 1 to 5, wherein the adhesive contains encapsulated polymerization initiators and encapsulated alkoxysilane precursors, which serve for self-healing in the event of occurrence of defects after the application.

7. Use according to one of Claims 1 to 6, wherein the adhesive is applied in media-carrying pipe systems of steel, stainless steel or Inconel, preferably in tank systems in which chemical products are stored or transported.

8. Use according to one of Claims 1 to 7, wherein the adhesive serves to line metal or plastic pipes, concrete pipes or tanks with a corrosion-protected metal film.

9. Method for the bonding of two substrates with metal, plastic, concrete and/or ceramic surfaces, wherein one or more adhesives according to one of Claims 1 to 8 from the group consisting of one or more hybrid materials containing an organic polymer from the group of the polyamides, polyimides and epoxy resins and an inorganic oligo- or polymer from the group of the oligo- and polysiloxanes and heterocondensates of Si with Ti, Zr and/or Al, wherein the organic and the inorganic component are covalently bound to one another, in combination with one or more inorganic sols based on silyl alkoxylates and/or titanium alkoxylates, wherein hybrid material and inorganic sol are crosslinked,
are applied onto at least one metal, concrete or ceramic surface of at least one substrate and the two substrates are thereafter joined together,
wherein the said polyamides, polyimides and epoxy resins have a thermal stability of at least 250°C, have functional end and/or side groups which are suitable for the covalent attachment of the inorganic component, and have free functional groups which enable curing during bonding.

10. Method according to Claim 9, wherein a metal surface is bonded with a metal or plastic surface, preferably metal surface.

11. Method according to Claim 9 or 10, wherein the adhesive develops its adhesive action through pressing and cures dimensionally stably through pressure.

12. Composition containing
ca) a hybrid material, containing an organic polymer from the group of the polyamides, polyimides and epoxy resins and, covalently bound thereto, an inorganic oligo- or polymer from the group of the oligo- or polysiloxanes or corresponding heterocondensates of Si with Ti, Zr and/or Al, and
cb) an inorganic sol based on silyl alkoxylates and/or titanium alkoxylates,
wherein hybrid material and sol are crosslinked,
and wherein the said polyamides, polyimides and epoxy resins have a thermal stability of at least 250°C, have functional end and/or side groups which are suitable for the covalent attachment of the inorganic component, and have free functional groups which enable curing during bonding.

13. Composition according to Claim 12, containing fluorine-containing additives for the establishment of an antiadhesive surface.

14. Composition according to Claim 12 or 13, containing titanium dioxide, preferably anatase and/or rutile, more preferably anatase, for achieving a self-cleaning effect under UV irradiation.

15. Use of a composition according to one of Claims 12 to 14 as sealing material and/or anticorrosion layer.

## Revendications

1. Utilisation d'un ou plusieurs matériaux du groupe constitué par un ou plusieurs matériaux hybrides contenant un polymère organique du groupe composé par les polyamides, les polyimides et les résines époxy et un oligomère ou polymère inorganique du groupe composé par les oligosiloxanes et polysiloxanes et des hétérocondensats de Si avec Ti, Zr et/ou Al, le composant organique et le composant inorganique étant liés l'un à l'autre de manière covalente, en combinaison avec un ou plusieurs sols inorganiques à base d'alcoxylates de silyle et/ou d'alcoxylates de titane, le matériau hybride et le sol inorganique étant réticulés,
en tant qu'adhésif pour le collage de métaux, de matières plastiques, de béton et/ou de céramiques, les polyamides, polyimides et résines époxy mentionnés présentant une stabilité en température d'au moins 250 °C, étant pourvus de groupes terminaux fonctionnels et/ou de groupes latéraux fonctionnels qui sont appropriés pour une liaison covalente du composant inorganique, et étant pourvus de groupes fonctionnels libres qui rendent possible un durcissement lors du collage.

2. Utilisation selon la revendication 1, l'adhésif contenant des accélérateurs de durcissement encapsulés, préférablement choisis dans le groupe constitué par l'eau, des acides de Lewis, des bases de Lewis et des mélanges de ces composants.

3. Utilisation selon la revendication 1 ou 2, l'adhésif étant dopé avec des nanoparticules magnétiques, de préférence de la magnétite nanométrique, le dopage servant à détecter des endroits défectueux et des défauts de la couche d'adhésif.

4. Utilisation selon l'une quelconque des revendications 1 à 3, l'adhésif contenant un ou plusieurs additifs contenant du fluor.

5. Utilisation selon l'une quelconque des revendications 1 à 4, l'adhésif contenant des capteurs de ligne qui rendent possible une détection d'endroits défectueux après l'application.

6. Utilisation selon l'une quelconque des revendications 1 à 5, l'adhésif contenant des initiateurs de polymérisation encapsulés ainsi que des précurseurs d'alcoxysilane encapsulés, qui servent à une auto-réparation lors de l'apparition de défauts après l'application.

7. Utilisation selon l'une quelconque des revendications 1 à 6, l'adhésif étant appliqué dans des milieux de systèmes tubulaires conducteurs composés d'acier, d'acier inoxydable ou d'inconel, de préférence dans des systèmes de réservoir dans lesquels des produits chimiques sont stockés ou transportés.

8. Utilisation selon l'une quelconque des revendications 1 à 7, l'adhésif servant à garnir des tubes métalliques ou de matière plastique, des tubes de béton ou des réservoirs avec une feuille métallique protégée de la corrosion.

9. Procédé pour le collage de deux substrats dotés de surfaces de métal, de matière plastique, de béton et/ou de céramique, dans lequel on dépose, sur au moins une surface de métal, de béton ou de céramique d'au moins un substrat, un ou plusieurs adhésifs selon l'une quelconque des revendications 1 à 8 du groupe constitué par un ou plusieurs matériaux hybrides contenant un polymère organique du groupe composé par les polyamides, les polyimides et les résines époxy et un oligomère ou polymère inorganique du groupe composé par les oligosiloxanes et polysiloxanes et des hétérocondensats de Si avec Ti, Zr et/ou Al, le composant organique et le composant inorganique étant liés l'un à l'autre de manière covalente, en combinaison avec un ou plusieurs sols inorganiques à base d'alcoxylates de silyle et/ou d'alcoxylates de titane, le matériau hybride et le sol inorganique étant réticulés,
et ensuite on assemble les deux substrats,
les polyamides, polyimides et résines époxy mentionnés présentant une stabilité en température d'au moins 250 °C, étant pourvus de groupes terminaux fonctionnels et/ou de groupes latéraux fonctionnels qui sont appropriés pour une liaison covalente du composant inorganique, et étant pourvus de groupes fonctionnels libres qui rendent possible un durcissement lors du collage.

10. Procédé selon la revendication 9, une surface de métal étant collée avec une surface de métal ou de matière plastique, de préférence une surface de métal.

11. Procédé selon la revendication 9 ou 10, l'adhésif développant son adhérence par pressage et durcissant de manière dimensionnellement stable par pression.

12. Composition contenant
ca) un matériau hybride, contenant un polymère organique du groupe composé par les polyamides, les polyimides et les résines époxy et, lié de manière covalente à celui-ci, un oligomère ou polymère inorganique du groupe composé par les oligosiloxanes et polysiloxanes ou des hétérocondensats correspondants de Si avec Ti, Zr et/ou Al, et
cb) un sol inorganique à base d'alcoxylates de silyle et/ou d'alcoxylates de titane,
le matériau hybride et le sol étant réticulés,
les polyamides, polyimides et résines époxy mentionnés présentant une stabilité en température d'au moins 250 °C, étant pourvus de groupes terminaux fonctionnels et/ou de groupes latéraux fonctionnels qui sont appropriés pour une liaison covalente du composant inorganique, et étant pourvus de groupes fonctionnels libres qui rendent possible un durcissement lors du collage.

13. Composition selon la revendication 12, contenant des additifs contenant du fluor pour l'ajustement d'une surface antiadhésive.

14. Composition selon la revendication 12 ou 13, contenant du dioxyde de titane, de préférence de l'anatase et/ou du rutile, particulièrement préférablement de l'anatase, pour l'obtention d'un effet auto-nettoyant sous rayonnement UV.

15. Utilisation d'une composition selon l'une quelconque des revendications 12 à 14 en tant que matériau de scellement et/ou couche de protection contre la corrosion.
